# EUROPEAN PATENT APPLICATION

(11) **EP 1 234 805 A1**
(43) Date of publication of application: **28.08.2002**
(21) Application number: 02075691.2
(22) Date of filing: 20.02.2002
(51) Int. Cl.: C02F 11/12

(54) **Method and device for processing dredging sludge, as well as products obtained thereby**

(30) Priority: 22.02.2001 BE 200100119
(71) Applicant: Goossen, Hendrik, 2018 Antwerpen (BE); Vandekeybus, Jozef, 2920 Kalmthout (BE); Vanderpoorten, E.A. Willy, 2630 Aartselaar (BE)
(72) Inventor: Goossen, Hendrik, 2018 Antwerpen (BE); Vandekeybus, Jozef, 2920 Kalmthout (BE); Vanderpoorten, E.A. Willy, 2630 Aartselaar (BE)
(74) Representative: Donné, Eddy

(57) **Abstract**

Method for processing dredging sludge, more particularly sludge originating from underwater bottoms of waterways, characterized in that the dredging sludge (1), whether subjected to a pre-treatment or not, whereby either components have been removed therefrom or added thereto, is dewatered by means of a pressing process, until an end product (5) remains having dry matter contents of minimum 55 weight percent.

## Description

This invention relates to a method and device for processing dredging sludge, as well as to products obtained thereby.

More particularly, it relates to the processing of so-called maintenance-dredging sludge, which has to be understood as the sludge layer of underwater bottoms of navigable or innavigable waterways.

It is known that waterways and such can be dredged in order to keep them free. It is also known that the processing and/or storing of the obtained dredging sludge more and more forms a problem, the more as the obtained dredging sludge, up to now, can be utilized for very little.

According to a first known technique, the dredging sludge is fed into sewage fields in order to have it dewatered there in a natural manner. This technique, however, has the major disadvantage that particularly large surfaces have to be available in order to make such sewage fields, as the dredging sludge usually can be stored in a sewage field in a layer with a thickness of 1 to 2 meters at most. Moreover, such technique is particularly expensive, not only as large areas have to be bought, but also as it is very labour-intensive. The dewatering by sewage fields, in fact, is only efficient if the dredging sludge is turned regularly. If one wants to apply the obtained product afterwards, the sewage field also has to be excavated again.

Another disadvantage of the sewage fields' method consists in that the obtained end product still shows little stability.

According to another known technique, the dredging sludge can be dewatered by treating it in a travelling screen press. Such travelling screen press has the advantage that the treatment can be performed in a continuous process, as a consequence of which it is suited for treating large masses of dredging sludge. A disadvantage, however, is that with such travelling screen press, no high pressures can be exerted and, as a result, the obtained end product can not be sufficiently dewatered for being really stable. Therefore, the product remains difficult to stack, and when one wants to render it higher stackable, in such stacks layers of ground have to be provided between the treated dredging sludge at regular interspaces.

It is also known to dewater organic sewage sludge, originating from clarification plants and such, in a filter press. In consideration of the fact that hereby, always relatively small quantities are concerned and all obtained organic material mostly can be applied again, the use of a filter press in the field of water clarification is a logical economic solution.

The application of pressing processes with high pressures, to which end, usually, in practice one must turn to batch processes, however, is not evident for the treatment of dredging sludge. In consideration of the fact that dredging sludge will behave different than organic sludge, it was always expected that the former could not be dewatered mechanically up to high dry matter contents, in any case not in an economically efficient manner. Batch processes, to wit, always were seen as processes too slow for treating large quantities of dredging sludge, such that as a possible solution, always continuous processes were chosen, such as the use of a travelling screen press, however, with the disadvantage that still too limited a dewatering is obtained.

Against all expectations, the inventor has noticed, that, on one hand, it is well possible to dewater dredging sludge in a mechanical way in an economic manner until high dry matter contents are obtained, such by subjecting the dredging sludge to a pressing process. On the other hand, he also noticed that by performing such pressing until dry matter contents of at least 55% are obtained, one unexpectedly obtains an economic product, more particularly a product which can be stored and processed in an efficient manner.

Thus, the invention in the first place relates to a method for processing dredging sludge, more particularly sludge originating from underwater bottoms of waterways, with the characteristic that the dredging sludge, whether subjected to a pre-treatment or not, whereby either components thereof have been removed therefrom or added thereto, is dewatered by means of a pressing process, until an end product remains having dry matter contents of minimum 55 weight percent.

By subjecting the dredging sludge to a pressing process, whereby a dewatering takes place of such kind that the obtained end product has dry matter contents of minimum 55 weight percent, an end product is obtained which in various ways is suited for further processing and/or storage in an economic manner, this contrary to the usual end products which are obtained after dewatering dredging sludge according to a classical method, such as sewage field treatment or treatment by means of a travelling screen press.

Preferably, and usually, the dredging sludge is dewatered by means of the aforementioned pressing process, until an end product remains, having dry matter contents of minimum 60 weight percent, as a result of which an even better processable and/or storable end product is obtained.

According to an important, preferred characteristic, the pressing process is performed in a filter press, more particularly a so-called chamber filter press, this as a "batch" process. Contrary to all expectations, the inventor has noticed that it is possible to perform with such filter press a dewatering of dredging sludge in an economic manner, not only in respect to the high dry matter contents which can be obtained, but also in respect to the periods of time which are necessary to perform the pressing operations concerned.

Preferably, the pressing process is performed in one pressing cycle, which, however, does not exclude that different pressing cycles are possible.

According to a preferred characteristic, the dredging sludge, before being subjected to said pressing process, is subjected to a pre-treatment in which a de-sanding takes place. Such de-sanding preferably is performed up to at least 63 micrometers, in other words, such that sand grains and such with an average diameter larger than 63 micrometers are removed from the dredging sludge.

As the dredging sludge is dewatered by means of a pressing process and, thus, no longer must dewater in a natural manner, according to the invention a de-sanding is made possible, this contrary to the sewage field system, whereby the presence of sand is desired as it enhances the natural dewatering. The de-sanding results in two important advantages, to wit that the dredging sludge is suitable for being fed through high-pressure pumps, such that, for building up the pressing pressure, use can be made of rotating pumps without having a high risk of a fast wear and tear due to abrasion as a result of the presence of sand particles, and that a usable intermediate product, to wit, sand, is obtained.

According to another preferred characteristic, the dredging sludge, before being subjected to said pressing process, is conditioned in order to obtain a better flocculation and/or dewatering ability, this separate from the fact which amount of sand is present in the dredging sludge.

Practically, such conditioning preferably shall take place by blending the dredging sludge with one or more of the following products, in solid form or in solution:
- ferrous chloride (FeCl₃) and/or derived products or compounds;
- aluminium chloride (AlCl₃) and/or derived products or compounds;
- ferrous sulfate ((Fe₂(So₄)₂) and/or derived products or compounds;
- polyaluminium chloride;
- one or more lime compounds,
- one or more lime compounds, chosen from the following series: unslaked lime (CaO), slaked lime (Ca(OH)₂), calcium carbonate (CaCO₃) and gypsum (CaSO₄);
- cationic, anionic or nonionic organic flocculation agent.

In the case of the products containing iron or aluminium, preferably a dosage of 0,34 to 5,2 kg iron or aluminium per ton of dry matter of dredging sludge is applied. In the case of products based on one or more lime compounds, preferably a dosage of 5,5 to 35 kg Ca per ton of dry matter of dredging sludge is applied. In the case of an organic flocculation agent, preferably a dosage of 1 to 20 kg per ton of dry matter of dredging sludge is applied, whereby the flocculation agent is expressed as 100% dry matter.

Efficient working times are obtained when before pressing, a filter pressing is performed at minimum 10 bar and, still better, approximately 15 bar, as a result of which cycle times of less than two hours can be managed, and whereby said contents of dry matter can be realized even in one hour.

As high contents of dry matter can be achieved in one pressing cycle, the method of the invention also is suitable for being followed by a post-treatment consisting of a thermic drying process, as a result of which a further processed end product with at least 65 and even more than 70 weight percent of dry matter can be realized in a cost-efficient manner. It is noted that such post-treatment of dredging sludge obtained according to the known dewatering processes, in other words, dredging sludge obtained by the sewage field system or by dewatering by means of a travelling screen press, was not realistic, in consideration of the fact that the dry matter contents of the obtained dredging sludge still were too low for performing a thermic drying in an economic manner, if a useful substance should be left over.

It is clear that the invention exclusively relates to the processing of dredging sludge, as just here the aforementioned unexpected effect of an economic solution manifests itself.

More particularly, preferably one will start from dredging sludge with one or more of the following characteristics, and preferably with a combination of all these characteristics:
- a sludge content of sludge particles of 2 micrometers to 63 micrometers, representing 50 to 99 weight percent, measured in the dry matter;
- a clay content of clay with particles smaller than or equal to 2 micrometers, representing 5 to 25 weight percent, measured in the dry matter;
- a sand content of sand with particles larger than 63 micrometers, representing 0 to 40 weight percent, measured in the dry matter;
- a content of organic materials representing less than 30 weight percent, measured in the dry matter.

Of course, the invention also relates to devices for processing dredging sludge, which devices specifically are intended for realizing said method, and more particularly devices comprising to this aim at least one filter press.

The filter press preferably consists of a chamber filter press with displaceable plates, which are provided with a filter cloth of geotextile or similar.

Finally, the invention also relates to the end product which is obtained by means of a pressing process according to the invention, more particularly dewatered dredging sludge with dry matter contents of minimum 55 weight percent, with the following mechanical soil characteristics:
- a permeability value, also called k-value, which, after optimum densification, is smaller than or equal to 1.10⁻⁹ m/s;
- an internal friction angle of 25 to 38 degrees;
- a cohesion of 25 to 35 kPa.

The obtained end product has a considerable economic value, such in comparison to end products obtained by means of the sewage field system or travelling screen presses. The end product obtained according to the invention now can be applied as a basic material for different purposes in an economic manner. In the most simple application, the product can be applied as a filling agent or raising agent, as it is particularly stable. To wit, it can be stacked without intermediate layers, as well as stacked with a relatively large inclination angle, as a result of which it can be used, amongst others, for building slopes, landscape embankments and such. Also, it is sufficiently stable to be driven on by vehicles.

The filter cakes obtained by means of the pressing process and the material formed therefrom also have the advantage that they show the characteristic that they almost do not take up any more water, even if they come into contact with water, for example, rain.

As the end product, obtained by pressing, also can be subjected to a post-drying in an economic manner, for example, a thermic tunnel drying, the end product even is usable as a basic material or blending material for various other applications, for example, in the clay-processing industry.

With the intention of better showing the characteristics of the invention, hereafter, as an example without any limitative character, a preferred form of embodiment is described, with reference to the accompanying drawings, wherein:
figure 1 schematically represents a preferred form of embodiment of the method according to the invention in a block diagram;
figure 2 schematically, in cross-section, represents a filter press which can be applied for realizing the method;
figure 3 represents the filter press of figure 2 at the end of a pressing cycle;
figure 4 schematically represents a cross-section according to line IV-IV in figure 3, without filter
cloth.

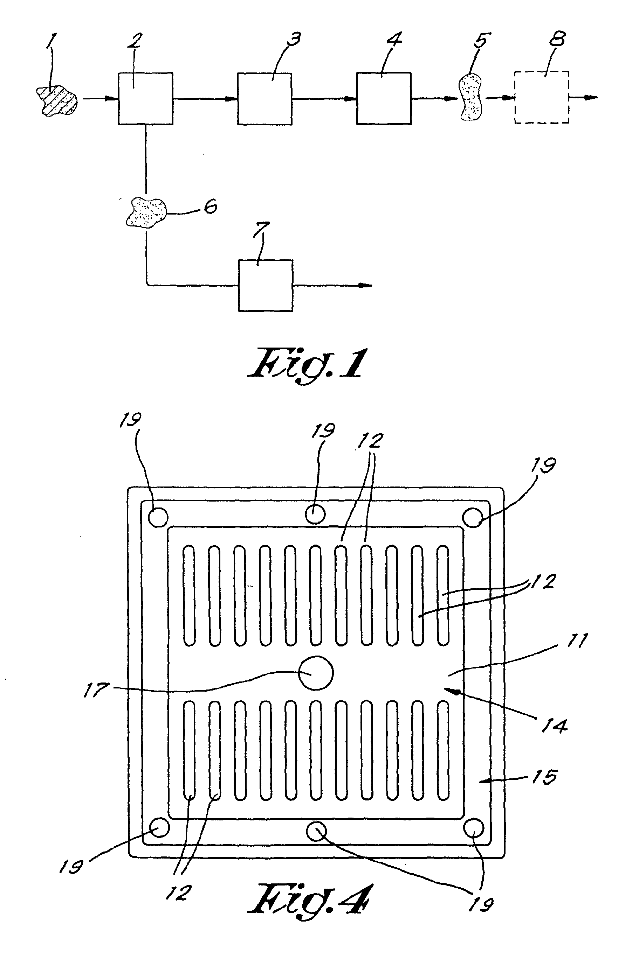

As represented in the block diagram of figure 1, the dredging sludge 1 preferably successively is subjected to a de-sanding 2, a conditioning 3 in order to provide for a better dewatering of the dredging sludge 1, and a pressing 4 during which the actual dewatering takes place, such until an end product 5 is obtained having dry matter contents of minimum 55 weight percent.

It is noted that the de-sanding 2 and the conditioning 3 are facultative steps.

The conditioning 3 preferably takes place after the de-sanding 2, although the reverse sequence is not excluded.

During the de-sanding 2, usable sand 6 is obtained which possibly can be subjected to a further cleaning treatment 7, such as, for example, the washing of this sand 6 in order to remove pollutants therefrom.

Possibly, the end product 5 can be treated further in a post-treatment step 8, more particularly an additional drying, for example, in a tunnel dryer.

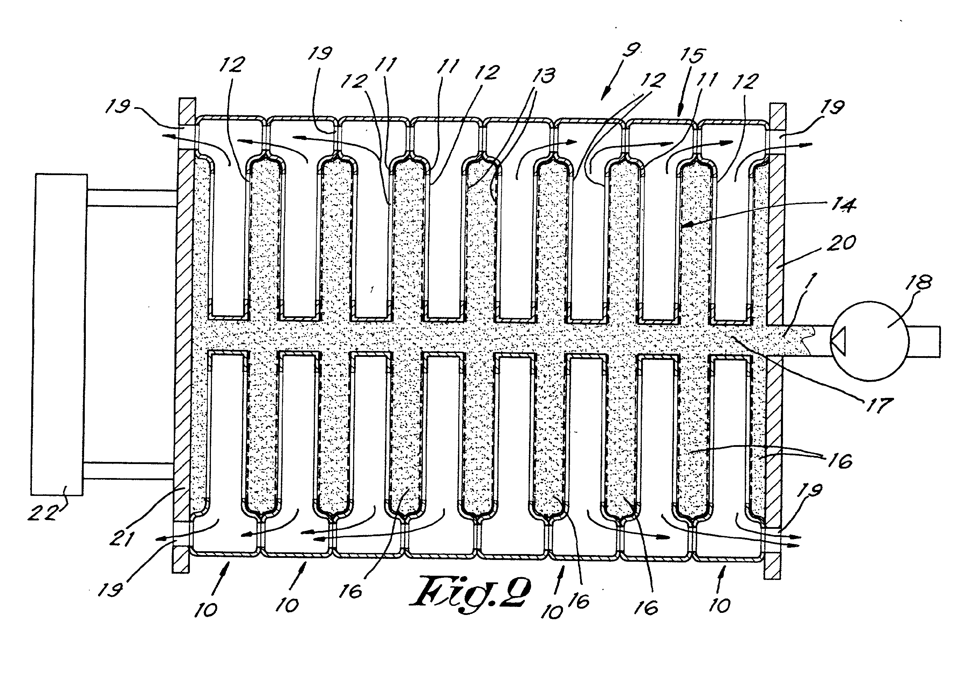

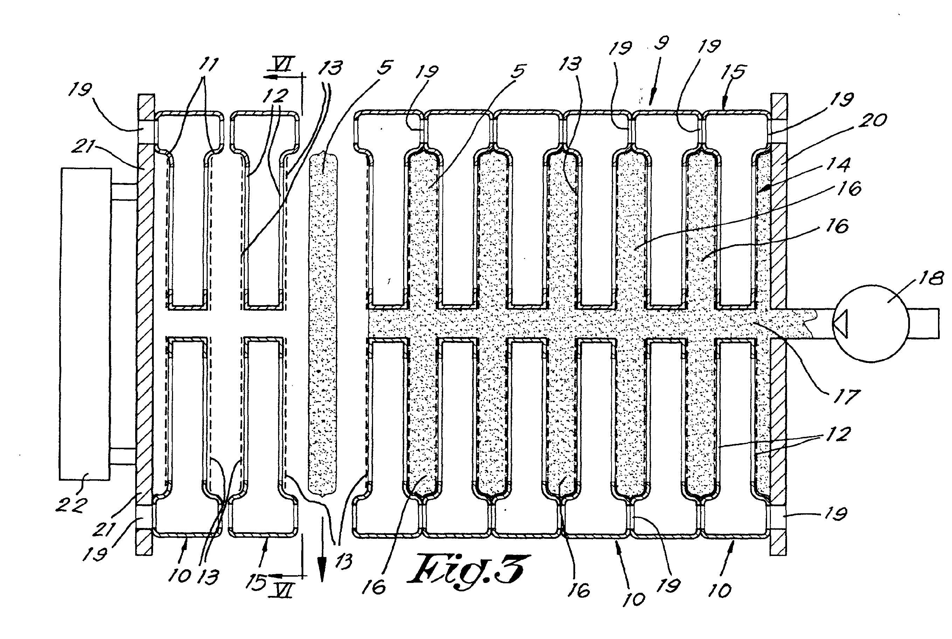

For the pressing 4, preferably use is made of a chamber filter press 9 of the type, such as schematically illustrated in figures 2 to 4.

This chamber filter press 9 comprises a series of plates 10, provided next to each other, which are double-walled and hollow. In the side walls 11 thereof, grooves 12 are provided, over which a filter cloth 13 extends, for example, made of geotextile.

The plates 10 have a central part 14 which is surrounded by a broader edge part 15, in such a manner that such a design of the plates 10 is obtained, that, if these plates are situated against each other, chambers 16 are created therebetween.

Centrally, a passage 17 is formed which extends through all plates 10, into which passage dredging sludge to be treated can be pumped by means of a pump 18.

Moreover, the hollow plates 10 comprise drain openings 19 through which pressed-out water can be drained.

When the chamber filter press 9 is in use, the plates 10 are kept pressed against each other by means of support means 20 and 21 and/or possible hydraulic pressing means 22.

The working is as follows. The dredging sludge 1 is fed by the pump 18 under pressure into the passage 17. Thereby, the chambers 16 are filling with dredging sludge 1, and due to the permanent pressure, the water is pushed away through the filter, formed by the geotextile 13 and the openings 12 in the hollow plates 10, whereas the solid substances are retained.

The water collected in the hollow plates 10 can leave them by means of the drain openings 19.

As the chambers 16 fill up with solid substances, the pressure increases, and this latter is maintained during approximately one hour at, for example, 15 bar. As a result thereof, a dewatering, as intended by the invention, is realized.

Figure 3 shows how the obtained end product 5 then can be removed from the chamber filter press 9. To this end, the plates 10, one after the other, are shifted sideways, such that the end product 5, which has the shape of a cake, each time can be removed from in between the plates 10.

It is noted that the figures 2 to 4 only give a schematic representation of such chamber filter press 9, however, that in reality, in an industrial application, such press may comprise up to 100 chambers 16. Usually, the chambers 16 have a thickness of 3 to 4 cm, whereas the surface in relation is larger than illustrated in the figures.

The present invention is in no way limited to the forms of embodiment described as an example and represented in the figures; on the contrary may such method and device for processing dredging sludge be realized according to various variants, as well as the obtained products may be of different kind, without leaving the scope of the invention.

## Claims

1. Method for processing dredging sludge, more particularly sludge originating from underwater bottoms of waterways, **characterized in that** the dredging sludge (1), whether subjected to a pre-treatment or not, whereby either components have been removed therefrom or added thereto, is dewatered by means of a pressing process, until an end product (5) remains having dry matter contents of minimum 55 weight percent.

2. Method according to claim 1, **characterized in that** the dredging sludge (1) is dewatered by means of said pressing process, until an end product (5) remains which has dry matter contents of minimum 60 weight percent.

3. Method according to claim 1 or 2, **characterized in that** the pressing process is performed in a filter press, preferably a so-called chamber filter press (9), this according to a "batch" process.

4. Method according to any of the preceding claims, **characterized in that** the pressing process is performed in a single pressing cycle.

5. Method according to any of the preceding claims, **characterized in that** the dredging sludge (1), before being subjected to said pressing process, is subjected to a pre-treatment in which a de-sanding takes place.

6. Method according to claim 5, **characterized in that** a de-sanding is performed at least up to 63 micrometers, in other words, that sand grains and such with an average diameter larger than 63 micrometers are removed from the dredging sludge (1).

7. Method according to any of the preceding claims, **characterized in that** the dredging sludge (1), before being subjected to said pressing process, is conditioned in order to obtain a better flocculation and/or dewatering ability.

8. Method according to claim 8, **characterized in that** the conditioning is performed by blending the dredging sludge (1) with one or more of the following products, in solid form or in solution:
- ferrous chloride (FeCl₃) and/or derived products or compounds;
- aluminium chloride (AlCl₃) and/or derived products or compounds;
- ferrous sulfate ((Fe₂(So₄)₂) and/or derived products or compounds;
- polyaluminium chloride;
- one or more lime compounds,
- one or more lime compounds, chosen from the following series: unslaked lime (CaO), slaked lime (Ca(OH)₂), calcium carbonate (CaCO₃) and gypsum (CaSO₄);
- cationic, anionic or nonionic organic flocculation agent.

9. Method according to claim 8, **characterized in that**:
- in the case of the products containing iron or aluminium, preferably a dosage of 0,34 to 5,2 kg iron or aluminium per ton of dry matter of dredging sludge (1) is applied;
- in the case of products based on one or more lime compounds, preferably a dosage of 5,5 to 35 kg Ca per ton of dry matter of dredging sludge (1) is applied;
- in the case of an organic flocculation agent, preferably a dosage of 1 to 20 kg per ton of dry matter of dredging sludge (1) is applied, whereby the flocculation agent is expressed as 100% dry matter.

10. Method according to any of the preceding claims, **characterized in that** for pressing, a filter pressing is performed at minimum 10 bar and still better approximately 15 bar, with a cycle time of maximum 2 hours.

11. Method according to any of the preceding claims, **characterized in that** the end product (5) obtained after said pressing process is subjected to a post-treatment, consisting of a thermal drying, such that after this drying, a product is obtained with minimum 65 and still better 70 weight percent of dry matter.

12. Method according to any of the preceding claims, **characterized in that** one starts from dredging sludge (1) showing one or more of the following characteristics, and preferably with a combination of all these characteristics:
- a sludge content of sludge particles of 2 micrometers to 63 micrometers, representing 50 to 99 weight percent, measured in the dry matter;
- a clay content of clay with particles smaller than or equal to 2 micrometers, representing 5 to 25 weight percent, measured in the dry matter;
- a sand content of sand with particles larger than 63 micrometers, representing 0 to 40 weight percent, measured in the dry matter;
- a content of organic materials representing less than 30 weight percent, measured in the dry matter.

13. Device for processing dredging sludge according to the method described in one of the preceding claims,
**characterized in that** it comprises at least one filter press.

14. Device according to claim 13, **characterized in that** the filter press consists of a chamber filter press (9) with displaceable plates (10), provided with a filter cloth (13) of geotextile or such.

15. Product, **characterized in that** it is obtained by means of a pressing process, as described in one of the claims 1 to 11.

16. Product according to claim 15, **characterized in that** it consists of dredging sludge (1) with dry matter contents of minimum 55 weight percent, with the following mechanical soil characteristics:
- a permeability value, also called k-value, which, after optimum densification, is smaller than or equal to 1.10⁻⁹ m/s;
- an internal friction angle of 25 to 38 degrees;
- a cohesion of 25 to 35 kPa.
